# EUROPÄISCHE PATENTSCHRIFT

(11) **EP 2 914 448 B1**
(45) Veröffentlichungstag und Bekanntmachung des Hinweises auf die Patenterteilung: **10.10.2018**
(21) Anmeldenummer: 13750317.3
(22) Anmeldetag: 14.08.2013
(51) Int. Cl.: B60C 11/13

(54) **FAHRZEUGLUFTREIFEN**
PNEUMATIC VEHICLE TIRE
PNEUMATIQUES DE VÉHICULE

(30) Priorität: 30.10.2012 DE 102012110360
(43) Veröffentlichungstag der Anmeldung: 09.09.2015
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2013/066982
(87) Internationale Veröffentlichungsnummer: WO 2014/067686

(56) Entgegenhaltungen:
- EP-A2- 0 875 403
- EP-A2- 0 950 547
- JP-A- H07 186 623

## Beschreibung

Die Erfindung betrifft einen Fahrzeugluftreifen für Personenkraftwagen mit einem profilierten Laufstreifen mit mehreren axial nebeneinander angeordneten, über den Umfang des Reifens erstreckten Profilbändern, beispielsweise Profilrippen oder Profilblockreihen, wobei jeweils zwei benachbarte Profilbänder von einer über den Umfang des Reifens erstreckten Umfangsrille voneinander getrennt sind, wobei die Profilbänder in radialer Richtung R nach außen von einer die Bodenkontaktoberfläche bildenden radial äußeren Oberfläche begrenzt werden und wobei die Umfangsrille in radialer Richtung R nach innen von einem über den Umfang des Reifens erstreckten Rillengrund und in axialer Richtung A beiderseits des Rillengrundes jeweils von einer Rillenwand begrenzt wird, welche die zur Umfangsrille hinweisende Profilbandflanke des angrenzenden Profilbandes bildet und sich in radialer Richtung ausgehend vom Rillengrund der Umfangsrille bis zur radial äußeren Oberfläche des Profilbandes erstreckt.

Derartige Fahrzeugluftreifen sind bekannt.

Üblicherweise sind Fahrzeugluftreifen für Personenkraftwagen (PKW) mit Umfangsrillen ausgebildet, deren Rillenflanken sich ausgehend vom Rillengrund im Wesentlichen gradlinig bis zur radial äußeren Oberfläche erstrecken und im Schnitt mit der radial äußeren Oberfläche einen nahezu scharfkantigen Übergang zwischen Rillenwand und radial äußerer Oberfläche bilden. Das Ableiten von Wasser aus der Profilmitte des Fahrzeugluftreifens wird hierdurch begrenzt. Es sind auch Ausbildungen von Umfangsrillen bekannt, bei denen längs der gesamten Erstreckung der Umfangsrille der Übergang zwischen Rillenwand und radial äußerer Oberfläche gleichmäßig abgerundet mit längs der Erstreckung der Umfangsrille konstant ausgebildetem Krümmungsradius ausgebildet ist. Diese konstante Abrundung hat zwar positive Einflüsse zur Vermeidung störender Wasserwirbel. Allerdings wird dies nur unter Verzicht jeglicher Kraftübertragungskanten im Bereich der radial äußeren Oberfläche längs der Erstreckung der Umfangsrille ermöglicht. Diese über den gesamten Umfang gleichmäßig verrundete Ausbildung führt darüber hinaus zu einer Reduktion der Kontaktfläche zur Straße und kann somit die Trockenbremseigenschaften negativ beeinflussen. Darüber hinaus entfallen im Erstreckungsbereich der Umfangsrille durch das Fehlen von Kraftübertragungskanten zwischen Profilband und radial äußerer Oberfläche jegliche Griffkanten, wodurch Nassgriff und Nasshandling negativ beeinflusst werden.

Es sind auch Fahrzeugluftreifen bekannt, bei denen über den gesamten Umfang des Fahrzeugluftreifens stetige Veränderungen der Abrundung des Übergangs zwischen Rillenflanke und radial äußerer Oberfläche ausgebildet sind. So ist beispielsweise aus der EP 0950547 B1 eine Ausbildung eines Fahrzeugluftreifens mit einer zentralen, wellenförmig über den Umfang erstreckten Umfangsrille bekannt, bei der längs der Erstreckung der Umfangsrille der zwischen Umfangsrille und den angrenzenden Umfangsrippen ausgebildeten Rillenwänden und der radial äußeren Oberfläche jeweils ausgebildete Übergang im Zyklus der Wellenform ebenfalls stetig zyklisch verändert ausgebildet ist. Die Veränderung ist dabei an den zyklischen Wechsel der Umfangsrille angepasst. Die Wellenform der Rillenwände behindert insbesondere bei schmalen Umfangsrillen die Ableitung des Wassers. Die wellenförmige Ausbildung der Umfangsrille muss sehr breit ausgebildet sein um einen ausreichenden Wasserablauf zu ermöglichen. Bei diesen durch die Umfangsrille begrenzten Umfangsrippen sind im Erstreckungsbereich der Umfangsrille keine Querkanten ermöglicht. Nassbremsen und Nassgriff werden insbesondere bei schmalen Umfangsrillen durch eine derartige Ausbildung somit beschränkt.

Es sind auch Fahrzeugluftreifen mit Laufstreifenprofilen bekannt, bei denen die Umfangsrillen in ihrem radial äußeren Erstreckungsbereich im Übergang zur radial äußeren Oberfläche als Fase mit sich über den Umfang des Reifens hinweg veränderndem Fasenwinkel ausgebildet ist. Auch derartige Ausbildungen mit Fasen ermöglichen noch eine ungünstige Wasserverwirbelung und hierdurch beschränkte Nassperformanceeigenschaften.

### Aus der JP H07 186623 A ist die Ausbildung eines Fahrzeugluftreifens gemäß den Merkmalen des Oberbegriffs von Anspruch 1 bekannt.

Der Erfindung liegt die Aufgabe zugrunde, bei derartigen Fahrzeugluftreifen den Zielkonflikt einer großen Bodenkontaktfläche für Trockenbremsen und einer guten Nässeperformance auf ein höheres Niveau anzuheben.

Die Aufgabe wird erfindungsgemäß durch die Ausbildung eines Fahrzeugluftreifens für Personenkraftwagen mit einem profilierten Laufstreifen mit mehreren axial nebeneinander angeordneten, über den Umfang des Reifens erstreckten Profilbändern, beispielsweise Profilrippen oder Profilblockreihen, wobei jeweils zwei benachbarte Profilbänder von einer über den Umfang des Reifens erstreckten Umfangsrille voneinander getrennt sind, wobei die Profilbänder in radialer Richtung R nach außen von einer die Bodenkontaktoberfläche bildenden radial äußeren Oberfläche begrenzt werden und wobei die Umfangsrille in radialer Richtung R nach innen von einem über den Umfang des Reifens erstreckten Rillengrund und in axialer Richtung A beiderseits des Rillengrundes jeweils von einer Rillenwand begrenzt wird, welche die zur Umfangsrille hinweisende Profilbandflanke des angrenzenden Profilbandes bildet und sich in radialer Richtung ausgehend vom Rillengrund der Umfangsrille bis zur radial äußeren Oberfläche des Profilbandes erstreckt, bei dem zumindest der Übergang zwischen der einen Rillenwand einer Umfangsrille und der radial äußeren Oberfläche des durch diese Rillenwand begrenzten Profilbandes in den Schnittebenen , die die Reifenachse beinhalten, eine mit einem Krümmungsradius r_{K} gekrümmte Konturlinie bildet, bei dem über den Umfang des Reifens hinweg hintereinander angeordnete Umfangsabschnitte ausgebildet sind, wobei in jedem Umfangsabschnitt längs seiner Erstreckung in der einen Drehrichtung D des Reifens ausgehend vom Beginn des Umfangsabschnitts bis zum Erstreckungsende des Umfangsabschnitts der Krümmungsradius r_{K} stetig zunimmt und wobei zwischen dem Erstreckungsende des Umfangsabschnitts und dem Erstreckungsbeginn des in Drehrichtung D nachgeordneten Umfangsabschnitts der Krümmungsradius r_{K} sprunghaft abnimmt, gemäß den Merkmalen von Anspruch 1 gelöst, bei dem das durch die Rillenwand begrenzte Profilband eine aus in Umfangsrichtung U hintereinander angeordneten und durch Querrillen voneinander beabstandeten Profilblockelementen ausgebildete Profilblockreihe ist, wobei die Umfangsabschnitte jeweils den Umfangserstreckungsabschnitt mehrerer hintereinander angeordneter Profilblockelemente(s) in der Rillenwand bilden.

Durch diese Ausbildung wird es ermöglicht, dass das Auftreten störender Wasserverwirbelungen längs der Erstreckung der Umfangsrille im Übergang zwischen radial äußerer Oberfläche und der Rillenwand stark vermieden wird und dabei dennoch durch die sich über den Umfang hinweg wiederholenden Abschnitte mit geringem Krümmungsradius eine relativ große Bodenkontaktoberfläche sichergestellt wird. Längs der Erstreckung der Umfangsabschnitte kann durch den sich reduzierenden Krümmungsradius eine optimierte Wasserableitung mit ausreichend langer Ableitstrecke ermöglicht werden. Der sich verjüngende Krümmungsradius bewirkt in den Endabschnitten der Umfangsabschnitte wirksame Griffkanten, die sich in Umfangsrichtung erstrecken und somit in Querrichtung guten Griff auf nasser Oberfläche und somit gutes Nasshandling ermöglichen. Die unstetigen Wechsel mit sprunghafter Veränderung der Krümmungsradien im Übergang zwischen den in Umfangsrichtung hintereinander angeordneten Umfangserstreckungsabschnitten bewirken zusätzlich eine Bereitstellung von Querkanten im radial äußeren Rillenwanderstreckungsabschnitt und in dem zur Umfangsrille hinweisenden Erstreckungsabschnitt der radial äußeren Oberfläche, wodurch ein verbesserter Nassgriff und eine verbesserte Übertragung von Bremskräften auf nasser Oberfläche ermöglicht werden kann. Somit können durch eine optimierte wirksame Bodenkontaktoberfläche und optimierte Nassgriffkanten unter weitgehender Verhinderung unerwünschter Verwirbelungen sowohl optimierte Trockenbremseigenschaften als auch optimierten Nassperformanceeigenschaften - wie Nasshandling und Nassbremsen - umgesetzt werden.

Besonders vorteilhaft zur Verbesserung der Ableitung des Wassers in die Umfangsrille ist die Ausbildung eines Fahrzeugreifens gemäß den Merkmalen von Anspruch 2, bei dem das durch die Rillenwand begrenzte Profilband eine aus in Umfangsrichtung U hintereinander angeordneten und durch Querrillen voneinander beabstandeten Profilblockelementen ausgebildete Profilblockreihe ist und bei dem die Umfangsposition des Reifens, in welcher eine derartige Querrille in die Umfangsrille mündet als Position der sprunghaften Reduktion des Krümmungsradius r_{K} zwischen zwei in Umfangsrichtung U hintereinander angeordneten Umfangsabschnitten ausgebildet ist.

Besonders vorteilhaft ist die Ausbildung eines Fahrzeugreifens gemäß den Merkmalen von Anspruch 3, bei dem das durch die Rillenwand begrenzte Profilband eine aus in Umfangsrichtung U hintereinander angeordneten und durch Querrillen voneinander beabstandeten Profilblockelementen ausgebildete Profilblockreihe ist, wobei die Umfangsabschnitte jeweils den Umfangserstreckungsabschnitt maximal vier hintereinander angeordneter Profilblockelemente(s) in der Rillenwand bilden. Hierdurch kann in einfacher Weise auch eine ausreichend lange Ableitstrecke zur Erzielung besonders verwirbelungsfreier Ableitung des Wassers umgesetzt werden.

Besonders vorteilhaft ist die Ausbildung eines Fahrzeugreifens gemäß den Merkmalen von Anspruch 4, wobei das Laufstreifenprofil ein drehrichtungsgebundenes Laufstreifenprofil und die Drehrichtung D die Gegendrehrichtung bei Vorwärtsfahrt des montierten Reifens ist. Hierdurch kann die Ableitung des Wassers bei Vorwärtsfahrt in die Umfangsrille weiter begünstigt werden.

Besonders vorteilhaft ist die Ausbildung eines Fahrzeugreifens gemäß den Merkmalen von Anspruch 5, wobei die Querrille, die in der Position der sprunghaften Reduktion des Krümmungsradius r_{K} in die Umfangsrille mündet, unter Einschluss eines spitzen Neigungswinkels α zur Umfangsrichtung U geneigt in die Umfangsrille mündet, wobei sie längs ihrer Erstreckung in axialer Richtung bis zur Einmündung eine in Drehrichtung D des Reifens orientierte Umfangsrichtungskomponente aufweist. Hierdurch kann zusätzlich ein schnelleres Ableiten des Wassers in die Umfangsrille weiter begünstigt werden.

Besonders vorteilhaft ist die Ausbildung eines Fahrzeugreifens gemäß den Merkmalen von Anspruch 6, wobei auch der Übergang zwischen der anderen die Umfangsrille begrenzenden Rillenwand der Umfangsrille in den Schnittflächen , die die Reifenachse beinhalten, und der radial äußeren Oberfläche des durch diese andere Rillenwand begrenzten Profilbandes eine mit einem Krümmungsradius r_{K} gekrümmte Konturlinie bildet, dass über den Umfang des Reifens hinweg hintereinander angeordnete Umfangsabschnitte ausgebildet sind, wobei in jedem Umfangsabschnitt längs seiner Erstreckung in einer Drehrichtung D' des Reifens ausgehend vom Beginn des Umfangsabschnitts bis zum Erstreckungsabschnitt des Umfangsabschnitts der Krümmungsradius r_{K} stetig zunimmt und wobei zwischen dem Erstreckungsende des Umfangsabschnitts und dem Erstreckungsbeginn des in Drehrichtung D' nachgeordneten Umfangsabschnitts der Krümmungsradius r_{K} sprunghaft abnimmt.

Besonders vorteilhaft ist die Ausbildung eines Fahrzeugreifens gemäß den Merkmalen von Anspruch 7, wobei das Laufstreifenprofil ein asymmetrisch ausgebildetes Laufstreifenprofil ist und die Drehrichtung D und die Drehrichtung D' entgegengesetzte Drehrichtungen sind. Der verbessertes Ableiten in beiden Drehrichtungen des Fahrzeugreifens ermöglicht die optimale verbesserter Wasserableitung bei asymmetrischen Profilen werden.

Besonders vorteilhaft ist die Ausbildung eines Fahrzeugreifens gemäß den Merkmalen von Anspruch 8, wobei das Laufstreifenprofil ein symmetrisch ausgebildetes Laufstreifenprofil ist und die Drehrichtung D und die Drehrichtung D' gleiche Drehrichtungen sind. Hierdurch können gerade bei symmetrischen Profilen die Wirkungen weiter verbessert werden.

Besonders vorteilhaft ist die Ausbildung eines Fahrzeugreifens gemäß den Merkmalen von Anspruch 9, wobei längs der Rillenwand in den Schnittebenen , die die Reifenachse beinhalten, zwischen Rillengrund und gekrümmter Konturlinie jeweils ein geradlinig konturierten Erstreckungsabschnitt der radialen Erstreckungshöhe h₁ mit h₁≥1mm ausgebildet ist.

Besonders vorteilhaft ist die Ausbildung eines Fahrzeugreifens gemäß den Merkmalen von Anspruch 10, wobei die Veränderung Δr_{K} des Krümmungsradius r_{K} längs des Umfangsabschnittes mit 2mm≤ Δr_{K} ≤ 5mm ausgebildet ist. Hierdurch können in einfacher Weise die genannten Vorteile wirkungsvoll umgesetzt werden.

Die Erfindung wird im Folgenden an Hand der in den Figuren 1 bis 7 dargestellten Ausführungsbeispiele näher erläutert. Hierin zeigen
- Fig.1: Ausschnitt eines Laufstreifenprofils eines PKW-Fahrzeugluftreifens in Draufsicht,
- Fig.2: Laufstreifenprofil von Fig. 1 in Schnittdarstellung gemäß Schnitt II-II von Fig.1,
- Fig.3: Laufstreifenprofil von Fig. 1 in Schnittdarstellung gemäß Schnitt III-III von Fig.1,
- Fig.4: Laufstreifenprofil von Fig. 1 in Schnittdarstellung gemäß Schnitt IV-IV von Fig.1,
- Fig.5: Laufstreifenprofil von Fig. 1 in Schnittdarstellung gemäß Schnitt V-V von Fig.1,
- Fig.6: Ausschnitt eines symmetrischen Laufstreifenprofils eines PKW-Fahrzeugluftreifens in Draufsicht und
- Fig.7: Ausschnitt eines asymmetrischen Laufstreifenprofils eines PKW-Fahrzeugluftreifens in Draufsicht.

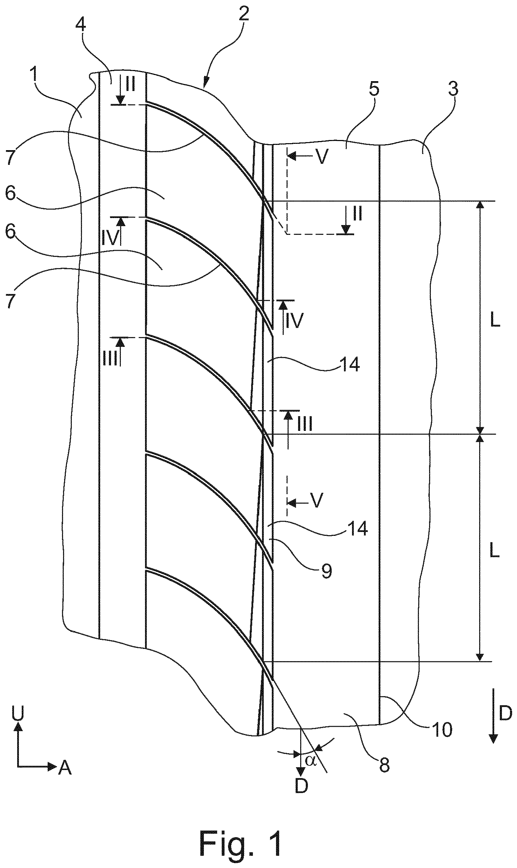

Die Figuren 1 bis 5 zeigen einen Abschnitt eines Laufstreifenprofils eines PKW-Fahrzeugluftreifens, bei welchem in axialer Richtung A des Fahrzeugluftreifens in bekannter Weise ein Profilband 1, eine Profilblockreihe 2 und ein Profilband 3 nebeneinander angeordnet sind. Die Profilbänder 1 und 3 erstrecken sich in bekannter Weise über den gesamten Umfang des Fahrzeugluftreifens und sind in Umfangsrichtung U des Fahrzeugluftreifens ausgerichtet. Die Profilblockreihe 2 ist in axialer Richtung A des Reifens zwischen den beiden Profilbändern 1 und 3 angeordnet und erstreckt sich in Umfangsrichtung U ausgerichtet über den gesamten Umfang des Fahrzeugluftreifens. Das Profilband 1 und die Profilblockreihe 2 sind in axialer Richtung A in bekannter Weise durch eine über den gesamten Umfang des Fahrzeugluftreifens erstreckte und in Umfangsrichtung U ausgerichtete Umfangsrille 4 voneinander beabstandet. Die Profilblockreihe 2 und das Profilband 3 sind in bekannter Weise durch eine über den gesamten Umfang des Fahrzeugluftreifens erstreckte und in Umfangsrichtung U ausgerichtete Umfangsrille 5 bekannter Art axial voneinander beabstandet. Die Profilblockreihe 2 ist in bekannter Weise aus einer Vielzahl von in Umfangsrichtung U des Fahrzeugluftreifens hintereinander angeordneten und jeweils durch Querrillen 7 voneinander beabstandeten Profilblockelementen 6 ausgebildet. Die Profilblockelemente 6 der Profilblockreihe 2 sowie die Profilbänder 1 und 3 sind in radialer Richtung R des Fahrzeugluftreifens nach außen hin jeweils durch eine die Bodenkontaktfläche bildende radial äußere Oberfläche 11 begrenzt. Die Querrillen 7 erstrecken sich in axialer Richtung A des Fahrzeugluftreifens ausgehend von der Umfangsrille 4 bis in die Umfangsrille 5. Die radial äußere Oberfläche 11 der Profilblockelemente 6 erstreckt sich dabei jeweils über die gesamte Umfangserstreckung des Profilblockelementes von der einen das jeweilige Profilblockelement 6 begrenzenden Querrille 7 bis zur anderen das Profilblockelement 6 begrenzenden Querrille 7.

Die Umfangsrille 4 ist in radialer Richtung R nach innen hin durch einen über den gesamten Umfang des Fahrzeugluftreifens erstreckten Rillengrund begrenzt. Beiderseits dieses Rillengrundes ist die Umfangsrille 4 in axialer Richtung A des Fahrzeugluftreifens jeweils durch eine Rillenwand begrenzt, welche sich bis zur radial äußeren Oberfläche 11 erstreckt. Die die Umfangsrille 4 zum Profilband 1 hin begrenzende Rillenwand bildet dabei die zur Umfangsrille 4 hin gerichtete Flanke des Profilbandes 1. Die zur Profilblockreihe 2 hingerichtete Rillenwand der Umfangsrille 4 bildet die zur Umfangsrille 4 hin gerichtete Flanke der Profilblockreihe 2 und somit der Profilblockelemente 6 der Profilblockreihe 2.

Die Umfangsrille 5 ist in radialer Richtung R nach innen hin durch einen über den gesamten Umfang des Fahrzeugluftreifens erstreckten Rillengrund 8 begrenzt. Die Umfangsrille 5 ist in axialer Richtung A beiderseits des Rillengrundes 8 jeweils durch eine Rillenwand 9 bzw. 10 begrenzt. Dabei bildet die die Umfangsrille 5 zum Profilband 3 hin begrenzende Rillenwand 10 die zur Umfangsrille 5 hin gerichtete Flanke des Profilbandes 3, welche sich ausgehend vom Rillengrund 8 in radialer Richtung R nach außen bis zu der radial äußeren Oberfläche 11 des Profilbandes 3 erstreckt. Die zur Profilblockreihe 2 hin die Umfangsrille 8 begrenzende Rillenwand 9 bildet die zur Umfangsrille 5 hin gerichtete Flanke der Profilblockreihe 2 sowie der Profilblockelemente 6 der Profilblockreihe 2. Die Rillenwand 9 erstreckt sich dabei, ausgehend vom Rillengrund 8 in radialer Richtung R nach außen bis zu der radial äußeren Oberfläche 11 der Profilblockelemente 6 und somit der Profilblockreihe 2.

Die Querrillen 7 sind in radialer Richtung R nach innen hin durch einen die Querrille 7 jeweils längs ihrer Erstreckung von Umfangsrille 4 bis zur Umfangsrille 5 hin erstreckten Rillengrund und in Umfangsrichtung U beiderseits des Rillengrundes jeweils durch eine Rillenwand begrenzt, welche jeweils eine zur Querrille 7 hin gerichtete Flanke des durch sie begrenzten Profilblockelementes 6 bildet. Die Rillenwände der Querrille 7 erstrecken sich ausgehend vom Rillengrund der Querrille 7 jeweils in radialer Richtung R nach außen bis zur radial äußeren Oberfläche 11 des durch die Rillenwand begrenzten Profilblockelementes 6.

Die Rillenwand 9 der Umfangsrille 8 ist in den die Reifenachse beinhaltenden Schnittebenen in ihrem radial äußeren Erstreckungsbereich 12 - wie in den Figuren 1 bis 5 zu erkennen ist - jeweils mit einer kreissegmentförmig gekrümmten Schnittkontur mit Krümmungsradius r_{K} ausgebildet, wobei der Krümmungsmittelpunkt des Krümmungsradius r_{K} auf der zum Profilblockelement 6 hin gerichteten Seite der Schnittkontur ausgebildet ist. In den Schnittebenen, welche die Reifenachse beinhalten, ist hierdurch der radial äußere Erstreckungsabschnitts 12 der Rillenwand 9 mit einer konvexen Krümmung ausgebildet. Die Kontur der Rillenwand 9 erstreckt sich hierdurch im radial äußeren Erstreckungsbereich 9 unter Einschluss einer Krümmung mit dem Krümmungsradius r_{K} bis zur radial äußeren Oberfläche 11 und geht in diese tangential über. Radial innerhalb des radial äußeren Erstreckungsabschnitts 12 ist die Rillenwand 9 längs der gesamten Erstreckung der Rillenwand in Umfangsrichtung U in den Schnittebenen, welche die Reifenachse beinhalten, ein radialer Erstreckungsabschnitts 13 der radialen Erstreckungshöhe h₁ mit h₁ ≥1 mm ausgebildet, in welchem die Schnittkonturlinie geradlinig ausgebildet ist.

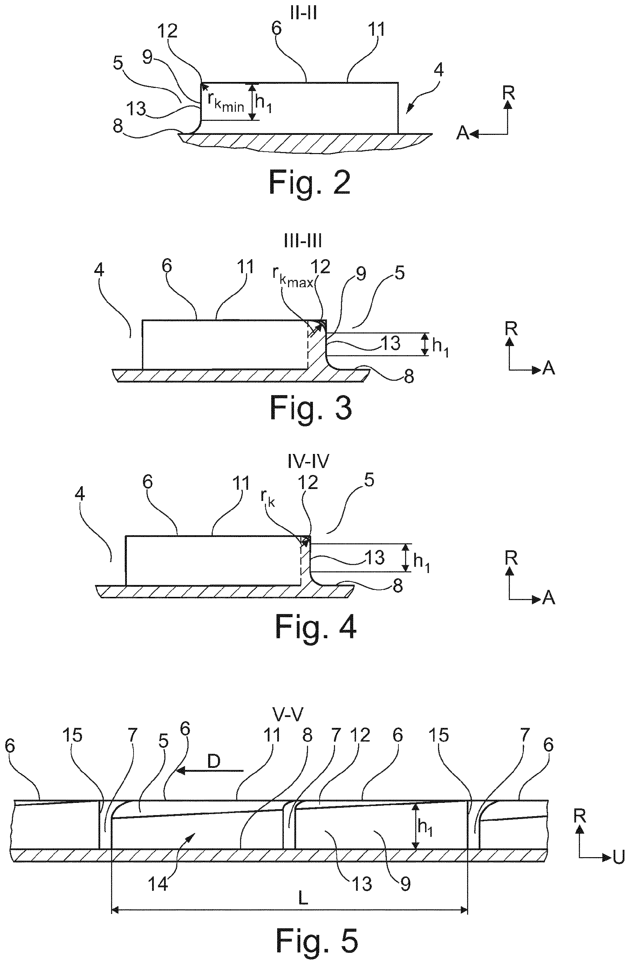

In Fig. 1 und in Fig.5 ist die Drehrichtung D des Fahrzeugluftreifens bei Vorwärtsfahrt mit einer Pfeildarstellung eingetragen. Wie in Figur 1 und in Figur 5 zu erkennen ist, ist die Rillenwand 14 aus in Drehrichtung D des Fahrzeugluftreifens hintereinander angeordneten Umfangserstreckungsabschnitt 14 ausgebildet. Ein Umfangserstreckungsabschnitt 14 erstreckt sich jeweils über den Erstreckungsabschnitt von zwei in Drehrichtung D hintereinander angeordneten benachbarten Profilblockelementen 6. Die in Drehrichtung D sich im Anschluss an den Umfangserstreckungsabschnitt 14 anschließende Querrille 7 begrenzt diesen Umfangserstreckungsabschnitt 14in Drehrichtung D. In Drehrichtung D beginnt im Anschluss an diese Querrille 7 ein neuer Umfangserstreckungsabschnitt 14, der sich ebenfalls in Drehrichtung D über den Erstreckungsabschnitt von zwei in Drehrichtung D hintereinander angeordneten Profilblockelementen 6 erstreckt. Diesem Umfangserstreckungsabschnitt 14 in Drehrichtung D nachgeordnet ist wiederum eine Querrille 7 angeordnet in deren Folge sich wiederum ein derartiger Umfangserstreckungsabschnitt 14 anschließt. Diese Abfolge von sich abwechselnden Umfangserstreckungsabschnitten 14 und Querrillen 7 wiederholt sich über den gesamten Umfang des Reifens. Auf diese Weise ist der radial äußere Erstreckungsabschnitt 12 der Rillenwand 8 aus einer Vielzahl von über den Umfang U des Fahrzeugluftreifens in Drehrichtung D hintereinander angeordneten Umfangserstreckungsabschnitten 14 ausgebildet, welche sich jeweils über die Umfangserstreckung zweier Profilblockelemente 6 erstrecken. In Drehrichtung D erstreckt sich dabei jeweils ein Umfangserstreckungsabschnitt 14 ausgehend von der dem Umfangserstreckungsabschnitt 14 in Drehrichtung D vorgeordneten Querrille 7 längs der Erstreckung des ersten Profilblockelements 6 und längs der Erstreckung des zweiten Profilblockelements 6 des Paares von zwei Profilblockelementen 6 bis zu der dem Umfangserstreckungsabschnitt 14 in Drehrichtung D nachgeordneten Querrille 7. Dabei nimmt längs der Erstreckung des Umfangserstreckungsabschnitts 14 in Drehrichtung D gesehen ausgehend vom Beginn des Umfangserstreckungsabschnitt 14 bis zu dem in Drehrichtung D ausgebildeten Erstreckungsende des Umfangserstreckungsabschnitts 14 der Krümmungsradius r_{K} kontinuierlich zu. Der Krümmungsradius r_{K} ist -wie in Figur 2 dargestellt ist - in der Umfangsposition, in welcher der Umfangserstreckungsabschnitt 14 in Drehrichtung D an die vorgeordneten Querrille 7 angrenzt, mit seinem Minimum r_{Kmin} ausgebildet. Der Krümmungsradius r_{K} ist - wie in Figur 4 dargestellt ist - in der Umfangsposition, in welcher der Umfangserstreckungsabschnitt 14 in Drehrichtung D an die nachgeordnete Querrille 7 angrenzt, mit seinem Maximum r_{Kmax} ausgebildet.

Längs der Erstreckung der Umfangsrille 5 über die dem Umfangserstreckungsabschnitt 14 in Drehrichtung D nachgeordnete den Umfangserstreckungsabschnitt 14 begrenzenden Querrille 7 hinweg zu dem der Querrille 7 in Drehrichtung D nachgeordneten Umfangserstreckungsabschnitt 14 ist der radial äußere Erstreckungsabschnitt 12 der Rillenwand 9 mit einer sprunghaften und somit unstetigen Veränderung ihres Krümmungsradius r_{K} um das Maß Δr_{K} = (r_{Kmax} - r_{Kmin}) ausgebildet. Die Veränderung Δr_{K} des Krümmungsradius r_{K} ist die Veränderung von dem maximalen Krümmungsradius r_{Kmax} des in Drehrichtung D der Querrille 7 vorgeordneten Umfangserstreckungsabschnitts 14 zu dem minimalen Krümmungsradius r_{Kmin} des in Drehrichtung D der Querrille 7 nachgeordneten Umfangserstreckungsabschnitts 14. Ausgehend von diesem minimalen Wert r_{Kmin} ist in dem der Querrille 7 nachgeordneten Umfangserstreckungsabschnitt 14 der radial äußere Erstreckungsabschnitt 12 längs der gesamten Erstreckung des dieses Umfangserstreckungsabschnitts der Erstreckungslänge L in Drehrichtung D wieder mit einem kontinuierlich zunehmendem Krümmungsradius r_{K} ausgebildet bis zum Maximalwert r_{Kmax}, welcher in der Umfangsposition der diesen Umfangserstreckungsabschnitt 14 in Drehrichtung D nachgeordnet begrenzend angeordnten Querrille 7 ausgebildet ist.

Die Veränderung Δr_{K} des Krümmungsradius des radial äußeren Erstreckungsabschnitts 12 ist dabei mit 2mm ≤ Δr_{K} ≤ 5mm ausgebildet. Beispielsweise ist Δr_{K} = 5 mm ausgebildet. Im dargestellten Ausführungsbeispiel ist r_{Kmin} = 0 mm und r_{Kmax} = 5 mm ausgebildet.

Die Querrillen 7 sind längs ihrer axialen Erstreckung ausgehend von der Umfangsrille 4 bis zur Umfangsrille 5 unter Einschluss eines längs der Erstreckung kontinuierlich abnehmenden Neigungswinkels α zur Drehrichtung D ausgebildet und mündet mit seinem minimalen Neigungswinkel αₘᵢₙ zur Drehrichtung D in die Umfangsrille 5 ein. Die Querrille 7 ist im Bereich der Einmündung dabei mit ihrer Haupterstreckungsrichtung mit einer größeren Richtungskomponente in Umfangsrichtung U als in axialer Richtung A erstreckt ausgebildet und im Bereich der Einmündung in die Umfangsrille 4 mit einer größeren Richtungskomponente in axialer Richtung A als in Umfangsrichtung U. Der Neigungswinkel α ist im Bereich der Einmündung in die Umfangsrille 5 mit αₘᵢₙ < 45 ° gewählt ausgebildet.

Wie in Figur 5 zur erkennen ist, ist in Drehrichtung D zwischen den in Drehrichtung D hintereinander angeordneten Erstreckungsabschnitten 14 der Erstreckungslänge L jeweils in der Position der die beiden Umfangserstreckungsabschnitte 14 trennenden Querrille 7 durch die sprunghafte Reduktion des Krümmungsradius r_{K} an dem in Drehrichtung D der Querrille 7nachgeordneten Umfangserstreckungsabschnitt 14 zwischen Rillenwand 9 der Umfangsrille 5 und der dem Umfangserstreckungsabschnitt 14 zugewandten Rillenwand der Querrille 7 Griffkanten 15 ausgebildet, die sich bis zur radial äußeren Oberfläche erstrecken.

Die Profilbänder 1 und 3 sind in bekannter Weise entweder als Umfangsrippe oder als Profilblockreihe bekannter Art ausgebildet.

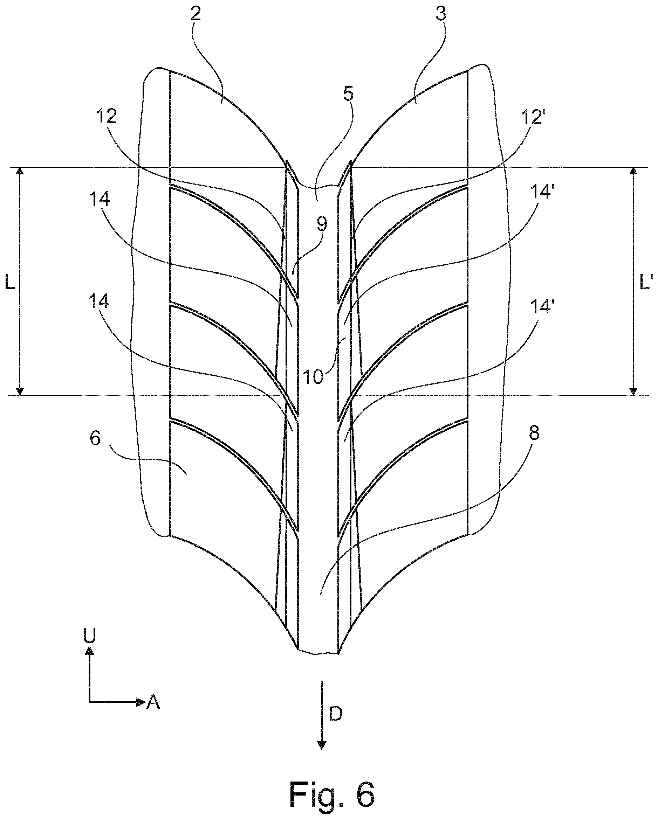

In Fig. 6 ist wie in Fig.1 eine Ausführung eines Laufstreifenprofils dargestellt, bei welcher jedoch zusätzlich zu der in Fig.1 dargestellten Ausführung auch die die Umfangsrille 5 zum ebenfalls als Profilblockreihe ausgebildeten Profilband 3 hin begrenzende Rillenwand 10 analog zur Rillenwand 9 mit einem radial inneren Erstreckungsabschnitt 14 und mit einem radial äußeren Erstreckungsabschnitt 12 ausgebildet ist. Der radial äußere Erstreckungsabschnitt 12 der Rillenwand 10 ist analog zum radial äußeren Erstreckungsabschnitt 12 der Rillenwand 9 in Drehrichtung D gesehen mit in Umfangsrichtung U hintereinander angeordneten Umfangerstreckungsabschnitten 14 ausgebildet, in welchen längs der Erstreckung in Drehrichtung D der Krümmungsradius r_{K}, ausgehend von einem Minium kontinuierlich bis zu einem Maximum zunimmt. An der den Umfangserstreckungsabschnitt 14 in Drehrichtung nachgeordneten Querrille nimmt der Krümmungsradius r_{K} sprunghaft auf sein Minimum ab. Der Minimalwert ist in dem radial äußere Erstreckungsabschnitt 12 in dem an diese Querrille in Drehrichtung D nachfolgenden Umfangserstreckungsabschnitt 14 zunächst ausgebildet. Ausgehend von dem Minimalwert nimmt der Krümmungsradius längs der Erstreckung dieses Umfangserstreckungsabschnittes 14 in Drehrichtung kontinuierlich zu.

Die Ausbildung ist ein Beispiel für eine Ausbildung eines drehrichtungsgebundenen Laufstreifenprofils.

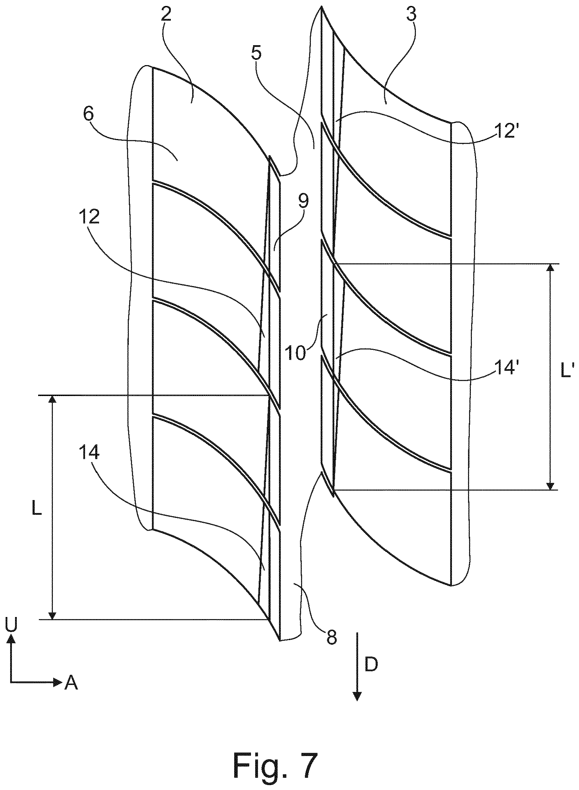

Figur 7 zeigt ein Ausführungsbeispiel analog zur Darstellung von Figur 6, jedoch an einem asymmetrischen Laufstreifenprofil. Bei diesem Ausführungsbeispiel ist innerhalb der Umfangserstreckungsabschnitte 14 die Veränderung des Krümmungsradius r_{K} entgegen der Drehrichtung D ausgebildet.

### Bezugszeichenliste

### (Teil der Beschreibung)

- 1: Profilband
- 2: Profilblockreihe
- 3: Profilband
- 4: Umfangsrille
- 5: Umfangsrille
- 6: Profilblockelement
- 7: Querrille
- 8: Rillengrund
- 9: Rillenwand
- 10: Rillenwand
- 11: Radial äußere Oberfläche
- 12: Übergangsabschnitt
- 13: Mittlerer Abschnitt
- 14: Umfangsabschnitt
- 15: Griffkantenabschnitt

## Patentansprüche

1. Fahrzeugluftreifen für Personenkraftwagen mit einem profilierten Laufstreifen mit mehreren axial nebeneinander angeordneten, über den Umfang des Reifens erstreckten Profilbändern (2,3), beispielsweise Profilrippen oder Profilblockreihen, wobei jeweils zwei benachbarte Profilbänder (2,3) von einer über den Umfang des Reifens erstreckten Umfangsrille (5) voneinander getrennt sind, wobei die Profilbänder (2,3) in radialer Richtung R nach außen von einer die Bodenkontaktoberfläche bildenden radial äußeren Oberfläche (11) begrenzt werden und wobei die Umfangsrille (5) in radialer Richtung R nach innen von einem über den Umfang des Reifens erstreckten Rillengrund (8) und in axialer Richtung A beiderseits des Rillengrundes (8) jeweils von einer Rillenwand (9,10) begrenzt wird, welche die zur Umfangsrille (5) hinweisende Profilbandflanke des angrenzenden Profilbandes (2,3) bildet und sich in radialer Richtung R ausgehend vom Rillengrund (8) der Umfangsrille (5) bis zur radial äußeren Oberfläche (11) des Profilbandes (2,3) erstreckt, wobei zumindest der Übergang zwischen der einen Rillenwand (8) einer Umfangsrille (5) und der radial äußeren Oberfläche (11) des durch diese Rillenwand (8) begrenzten Profilbandes (2) in den Schnittebenen, die die Reifenachse beinhalten, eine mit einem Krümmungsradius rK gekrümmte Konturlinie bildet, wobei über den Umfang des Reifens hinweg hintereinander angeordnete Umfangsabschnitte (14) ausgebildet sind, wobei in jedem Umfangsabschnitt (14) längs seiner Erstreckung in der einen Drehrichtung D des Reifens ausgehend vom Beginn des Umfangsabschnitts bis zum Erstreckungsende des Umfangsabschnitts (14) der Krümmungsradius rK stetig zunimmt und wobei zwischen dem Erstreckungsende des Umfangsabschnitts (14) und dem Erstreckungsbeginn des in Drehrichtung D nachgeordneten Umfangsabschnitts (14) der Krümmungsradius rK sprunghaft abnimmt,
**dadurch gekennzeichnet,**
**dass** das durch die Rillenwand (9) begrenzte Profilband (2) eine aus in Umfangsrichtung U hintereinander angeordneten und durch Querrillen (7) voneinander beabstandeten Profilblockelementen (6) ausgebildete Profilblockreihe ist, wobei die Umfangsabschnitte (14) jeweils den Umfangserstreckungsabschnitt mehrerer hintereinander angeordneter Profilblockelemente(s) (6) in der Rillenwand (9) bilden.

2. Fahrzeugluftreifen gemäß den Merkmalen von Anspruch 1,
bei dem das durch die Rillenwand (9) begrenzte Profilband (2) eine aus in Umfangsrichtung U hintereinander angeordneten und durch Querrillen (7) voneinander beabstandeten Profilblockelementen (6) ausgebildete Profilblockreihe ist und bei dem die Umfangsposition des Reifens, in welcher eine derartige Querrille (7) in die Umfangsrille (5) mündet als Position der sprunghaften Reduktion des Krümmungsradius r_{K} zwischen zwei in Umfangsrichtung U hintereinander angeordneten Umfangsabschnitten (14) ausgebildet ist.

3. Fahrzeugluftreifen gemäß den Merkmalen von Anspruch 1,
bei dem das durch die Rillenwand (9) begrenzte Profilband (2) eine aus in Umfangsrichtung U hintereinander angeordneten und durch Querrillen (7) voneinander beabstandeten Profilblockelementen (6) ausgebildete Profilblockreihe ist, wobei die Umfangsabschnitte (14) jeweils den Umfangserstreckungsabschnitt maximal vier hintereinander angeordneter Profilblockelemente(s) (6) in der Rillenwand (9) bilden.

4. Fahrzeugluftreifen gemäß den Merkmalen von einem der vorangegangenen Ansprüche,
wobei das Laufstreifenprofil ein drehrichtungsgebundenes Laufstreifenprofil und die Drehrichtung D die Gegendrehrichtung bei Vorwärtsfahrt des montierten Reifens ist.

5. Fahrzeugluftreifen gemäß den Merkmalen von einem der Ansprüche 2 bis 4, wobei die Querrille (7), die in der Position der sprunghaften Reduktion des Krümmungsradius r_{K} in die Umfangsrille (5) mündet, unter Einschluss eines spitzen Neigungswinkels α zur Umfangsrichtung U geneigt in die Umfangsrille (5) mündet, wobei sie längs ihrer Erstreckung in axialer Richtung A bis zur Einmündung eine in Drehrichtung D des Reifens orientierte Umfangsrichtungkomponente aufweist.

6. Fahrzeugluftreifen gemäß den Merkmalen von einem der vorangegangenen Ansprüche,
wobei auch der Übergang zwischen der anderen die Umfangsrille (5) begrenzenden Rillenwand (10) der Umfangsrille (5) in den Schnittflächen , die die Reifenachse beinhalten, und der radial äußeren Oberfläche (11) des durch diese andere Rillenwand (10) begrenzten Profilbandes (3) eine mit einem Krümmungsradius r_{K} gekrümmte Konturlinie bildet, dass über den Umfang des Reifens hinweg hintereinander angeordnete Umfangsabschnitte (14') ausgebildet sind, wobei in jedem Umfangsabschnitt (14') längs seiner Erstreckung in einer Drehrichtung D' des Reifens ausgehend vom Beginn des Umfangsabschnitts (14') bis zum Erstreckungsabschnitt des Umfangsabschnitts (14') der Krümmungsradius r_{K} stetig zunimmt und wobei zwischen dem Erstreckungsende des Umfangsabschnitts (14') und dem Erstreckungsbeginn des in Drehrichtung D' nachgeordneten Umfangsabschnitts (14') der Krümmungsradius r_{K} sprunghaft abnimmt.

7. Fahrzeugluftreifen gemäß den Merkmalen von Anspruchs 6,
wobei das Laufstreifenprofil ein asymmetrisch ausgebildetes Laufstreifenprofil ist und die Drehrichtung D und die Drehrichtung D' entgegengesetzte Drehrichtungen sind.

8. Fahrzeugluftreifen gemäß den Merkmalen von Anspruch 6,
wobei das Laufstreifenprofil ein symmetrisch ausgebildetes Laufstreifenprofil ist und die Drehrichtung D und die Drehrichtung D' gleiche Drehrichtungen sind.

9. Fahrzeugluftreifen gemäß den Merkmalen von einem der vorangegangenen Ansprüche,
wobei längs der Rillenwand in den Schnittebenen , die die Reifenachse beinhalten, zwischen Rillengrund (8) und gekrümmter Konturlinie (12) jeweils ein geradlinig konturierten Erstreckungsabschnitt (13) der radialen Erstreckungshöhe h₁ mit h₁≥1mm ausgebildet ist.

10. Fahrzeugluftreifen gemäß den Merkmalen von einem der vorangegangenen Ansprüche,
wobei die Veränderung Δr_{K} des Krümmungsradius r_{K} längs des Umfangsabschnittes (14) mit 2mm≤ Δr_{K} ≤ 5mm ausgebildet ist.

## Claims

1. Pneumatic vehicle tyre for passenger vehicles, comprising a profiled tread with multiple profile strips (2, 3), for example profile ribs or rows of tread bars, that are arranged axially next to one another and are made to extend over the circumference of the tyre, wherein every two adjacent profile strips (2, 3) are respectively separated from one another by a circumferential groove (5) that is made to extend over the circumference of the tyre, wherein the profile strips (2, 3) are bounded outwardly in the radial direction R by a radially outer surface (11), forming the ground contact surface, and wherein the circumferential groove (5) is bounded inwardly in the radial direction R by a groove base (8) that is made to extend over the circumference of the tyre and bounded in the axial direction A on both sides of the groove base (8) in each case by a groove wall (9, 10), which forms the profile strip flank of the adjacent profile strip (2, 3) directed towards the circumferential groove (5) and extends in the radial direction R from the groove base (8) of the circumferential groove (5) up to the radially outer surface (11) of the profile strip (2, 3), wherein at least the transition between the one groove wall (8) of a circumferential groove (5) and the radially outer surface (11) of the profile strip (2) bounded by this groove wall (8) forms in the sectional planes that contain the tyre axis a contour line curved with a radius of curvature r_{K}, wherein circumferential portions (14) arranged one behind the other over the circumference of the tyre are formed, wherein, in each circumferential portion (14), the radius of curvature r_{K} increases steadily along the extent thereof in the one direction of rotation D of the tyre from the beginning of the circumferential portion to the end of the extent of the circumferential portion (14), and wherein the radius of curvature r_{K} decreases abruptly between the end of the extent of the circumferential portion (14) and the beginning of the extent of the circumferential portion (14) arranged thereafter in the direction of rotation D,
**characterized**
**in that** the profile strip (2) bounded by the groove wall (9) is a row of tread bars formed by tread bar elements (6) arranged one behind the other in the circumferential direction U and spaced apart from one another by transverse grooves (7), wherein the circumferential portions (14) respectively form the portion of the circumferential extent of a number of tread bar elements (6) arranged one behind the other in the groove wall (9).

2. Pneumatic vehicle tyre according to the features of Claim 1,
in which the profile strip (2) bounded by the groove wall (9) is a row of tread bars formed by tread bar elements (6) arranged one behind the other in the circumferential direction U and spaced apart from one another by transverse grooves (7) and in which the circumferential position of the tyre in which such a transverse groove (7) enters the circumferential groove (5) is formed as the position of the abrupt reduction in the radius of curvature r_{K} between two circumferential portions (14) arranged one behind the other in the circumferential direction U.

3. Pneumatic vehicle tyre according to the features of 1,
in which the profile strip (2) bounded by the groove wall (9) is a row of tread bars formed by tread bar elements (6) arranged one behind the other in the circumferential direction U and spaced apart from one another by transverse grooves (7), wherein the circumferential portions (14) respectively form the portion of the circumferential extent of at most four tread bar elements (6) arranged one behind the other in the groove wall (9).

4. Pneumatic vehicle tyre according to the features of one of the preceding claims,
wherein the tread profile is a directional tread profile and the direction of rotation D is the opposite direction of rotation during forward driving of the fitted tyre.

5. Pneumatic vehicle tyre according to the features of one of Claims 2 to 4, wherein the transverse groove (7) that enters the circumferential groove (5) in the position of the abrupt reduction in the radius of curvature r_{K} enters the circumferential groove (5) inclined in relation to the circumferential direction U with the inclusion of an acute angle of inclination a, wherein it has along its extent in the axial direction A up to the point of entry a circumferential direction component that is oriented in the direction of rotation D of the tyre.

6. Pneumatic vehicle tyre according to the features of one of the preceding claims,
wherein also the transition between the other groove wall (10) of the circumferential groove (5) that bounds the circumferential groove (5) in the sectional areas that contain the tyre axis and the radially outer surface (11) of the profile strip (3) bounded by this other groove wall (10) forms a contour line curved with a radius of curvature r_{K}, that circumferential portions (14') arranged one behind the other over the circumference of the tyre are formed, wherein, in each circumferential portion (14'), the radius of curvature r_{K} increases steadily along its extent in a direction of rotation D' of the tyre, from the beginning of the circumferential portion (14') to the portion of the extent of the circumferential portion (14'), and wherein the radius of curvature r_{K} decreases abruptly between the end of the extent of the circumferential portion (14') and the beginning of the extent of the circumferential portion (14') arranged thereafter in the direction of rotation D'.

7. Pneumatic vehicle tyre according to the features of Claim 6,
wherein the tread profile is an asymmetrically formed tread profile and the direction of rotation D and the direction of rotation D' are opposite directions of rotation.

8. Pneumatic vehicle tyre according to the features of Claim 6,
wherein the tread profile is a symmetrically formed tread profile and the direction of rotation D and the direction of rotation D' are the same directions of rotation.

9. Pneumatic vehicle tyre according to the features of one of the preceding claims,
wherein along the groove wall in the sectional planes that contain the tyre axis there is formed in each case between the groove base (8) and the curved contour line (12) a straight-contoured portion of extent (13) of the radial height of extent h₁, with h₁ ≥ 1 mm.

10. Pneumatic vehicle tyre according to the features of one of the preceding claims,
wherein the variation Δr_{K} of the radius of curvature r_{K} along the circumferential portion (14) is formed with 2 mm ≤ Δr_{K} ≤ 5 mm.

## Revendications

1. Pneumatique de véhicule pour des voitures particulières avec une bande de roulement profilée avec plusieurs bandes profilées (2, 3) disposées axialement l'une à côté de l'autre et s'étendant sur la périphérie du pneu, par exemple des nervures profilées ou des rangées de blocs profilés, dans lequel chaque fois deux bandes profilées voisines (2, 3) sont séparées l'une de l'autre par une rainure périphérique (5) s'étendant sur la périphérie du pneu, dans lequel les bandes profilées (2, 3) sont limitées en direction radiale R vers l'extérieur par une surface radialement extérieure (11) formant la surface de contact avec le sol et dans lequel la rainure périphérique (5) est limitée en direction radiale R vers l'intérieur par un fond de rainure (8) s'étendant selon la périphérie du pneu et en direction axiale A de part et d'autre du fond de rainure (8) chaque fois par une paroi de rainure (9, 10), qui forme le flanc de bande profilée de la bande profilés adjacente (2, 3) tourné vers la rainure périphérique (5) et s'étend en direction radiale R à partir du fond de rainure (8) de la rainure périphérique (5) jusqu'à la surface radialement extérieure (11) de la bande profilée (2, 3), dans lequel au moins la transition entre la première paroi de rainure (8) d'une rainure périphérique (5) et la surface radialement extérieure (11) de la bande profilée (2) limitée par cette paroi de rainure (8) forme dans les plans de coupe, qui contiennent l'axe du pneu, une ligne de contour incurvée avec le rayon de courbure r_{K}, dans lequel des parties périphériques (14) disposées l'une derrière l'autre sont formées sur la périphérie du pneu, dans lequel dans chaque partie périphérique (14) le rayon de courbure r_{K} augmente en continu le long de son extension dans un premier sens de rotation D du pneu depuis le début de la partie périphérique jusqu'à la fin de l'extension de la partie périphérique (14) et dans lequel le rayon de courbure r_{K} diminue par sauts entre la fin de l'extension de la partie périphérique (14) et le début de l'extension de la partie périphérique (14) qui suit dans le sens de rotation D,
**caractérisé en ce que** la bande profilée (2) limitée par la paroi de rainure (9) est une rangée de blocs profilés formée d'éléments de blocs profilés (6) disposés l'un derrière l'autre en direction périphérique U et espacés par des rainures transversales (7), dans lequel les parties périphériques (14) forment respectivement la partie d'extension périphérique de plusieurs éléments de blocs profilés disposés l'un derrière l'autre (6) dans la paroi de rainure (9).

2. Pneumatique de véhicule selon les caractéristiques de la revendication 1, dans lequel la bande profilée (2) limitée par la paroi de rainure (9) est une rangée de blocs profilés formée d'éléments de blocs profilés (6) disposés l'un derrière l'autre en direction périphérique U et espacés l'un de l'autre par des rainures transversales (7) et dans lequel la position périphérique du pneu, dans laquelle une telle rainure transversale (7) débouche dans la rainure périphérique (5), est formée comme la position de la réduction par saut du rayon de courbure r_{K} entre deux parties périphériques (14) disposées l'une derrière l'autre en direction périphérique U.

3. Pneumatique de véhicule selon les caractéristiques de la revendication 1, dans lequel la bande profilée (2) limitée par la paroi de rainure (9) est une rangée de blocs profilés formée d'éléments de blocs profilés (6) disposés l'un derrière l'autre en direction périphérique U et espacés l'un de l'autre par des rainures transversales (7), dans lequel les parties périphériques (14) forment respectivement la partie d'extension périphérique au maximum de quatre éléments de blocs profilés disposés l'un derrière l'autre (6) dans la paroi de rainure (9).

4. Pneumatique de véhicule selon les caractéristiques de l'une quelconque des revendications précédentes, dans lequel le profil de la bande de roulement est un profil de bande de roulement lié au sens de rotation et le sens de rotation D est le sens de rotation opposé lors d'une marche avant du pneu monté.

5. Pneumatique de véhicule selon les caractéristiques de l'une quelconque des revendications 2 à 4, dans lequel la rainure transversale (7), qui débouche dans la rainure périphérique (5) à la position de la réduction par saut du rayon de courbure r_{K}, débouche en oblique dans la rainure périphérique (5) en formant un angle d'inclinaison aigu α avec la direction périphérique U, dans lequel elle présente le long de son extension en direction axiale A jusqu'à son embouchure une composante de direction périphérique orientée dans le sens de rotation D du pneu.

6. Pneumatique de véhicule selon les caractéristiques de l'une quelconque des revendications précédentes, dans lequel la transition entre l'autre paroi de rainure (10) de la rainure périphérique (5) limitant la rainure périphérique (5) forme dans les faces de coupe, qui contiennent l'axe du pneu, et la surface radialement extérieure (11) de la bande profilée (3) limitée par cette autre paroi de rainure (10) une ligne de contour incurvée avec un rayon de courbure r_{K}, en ce que des parties périphériques disposées l'une derrière l'autre (14') sont formées sur la périphérie du pneu, dans lequel dans chaque partie périphérique (14') le rayon de courbure r_{K} augmente en continu le long de son extension dans un sens de rotation D' du pneu depuis le début de la partie périphérique (14') jusqu'à la partie d'extension de la partie périphérique (14') et dans lequel le rayon de courbure r_{K} diminue par sauts entre la fin de l'extension de la partie périphérique (14') et le début de l'extension de la partie périphérique (14') qui suit dans le sens de rotation D'.

7. Pneumatique de véhicule selon les caractéristiques de la revendication 6, dans lequel le profil de bande de roulement est un profil de bande de roulement de forme asymétrique et le sens de rotation D et le sens de rotation D' sont des sens de rotation opposés.

8. Pneumatique de véhicule selon les caractéristiques de la revendication 6, dans lequel le profil de bande de roulement est un profil de bande de roulement de forme symétrique et le sens de rotation D et le sens de rotation D' sont des sens de rotation identiques.

9. Pneumatique de véhicule selon les caractéristiques de l'une quelconque des revendications précédentes, dans lequel une partie d'extension de contour rectiligne (13) de hauteur d'extension radiale h₁ avec h₁ ≥ 1 mm est formée le long de la paroi de rainure dans les plans de coupe, qui contiennent l'axe du pneu, entre le fond de rainure (8) et la ligne de contour incurvée (12).

10. Pneumatique de véhicule selon les caractéristiques de l'une quelconque des revendications précédentes, dans lequel la variation Δr_{K} du rayon de courbure r_{K} le long de la partie périphérique (14) est formée avec 2 mm ≤ Δr_{K} ≤ 5 mm.
